# EUROPEAN PATENT APPLICATION

(11) **EP 1 231 425 A2**
(43) Date of publication of application: **14.08.2002**
(21) Application number: 02445020.7
(22) Date of filing: 08.02.2002
(51) Int. Cl.: F16L 37/12

(54) **Arrangement for joining conduits**

(30) Priority: 09.02.2001 US 779971
(71) Applicant: DRESSER WAYNE AB, S-200 61 Malmö (SE)
(72) Inventor: Larsson, Bengt I., 274 53 Skivarp (SE); Svensson-Olsson, Viveka, 231 92 Trelleborg (SE)
(74) Representative: Rostovanyi, Peter

(57) **Abstract**

An arrangement for joining conduits comprises an annular receiver or coupling having an axial bore, a conduit having a conduit end for disposing in the bore. Two external annular beads are pressed out from the conduit wall on the conduit end and accommodate between themselves an O-ring. In an arrangement for joining, the receiver or coupling is provided with holes which are adapted to receive a rider, engaging the first bead of the conduit and detachably retaining the conduit end in the receiver or coupling.

## Description

### Field of the Invention

The present invention relates to an arrangement for joining conduits.

### Background of the Invention

Many methods are known for joining components for fluid pipes, e.g. conduits. One method aims at welding or soldering collars in/to the conduit ends, between which collars a flat packing is clamped by means of bolts which are screwed through flanges attached to the conduits. The bolts must be forcefully tightened so as to achieve a satisfactory seal. In another method, conical sockets instead of collars are welded/soldered to the conduit ends which are joined by means of corresponding conical coupings, the conduits and the coupling being also in this case interconnected by means of bolts that are screwed through flanges. Sealing is effected by means of O rings arranged in grooves in the sockets. Obviously the methods require a relatively large number of components and relatively great efforts and are cost-intensive also for the reason that a relatively expensive material, such as copper, brass or steel, must be used. A less expensive piping is obtained with aluminium, use being made of conduits with protruding ends and coupling components which are die-cast and formed with threads but which must be machined owing to the fact that small tolerances are required for obtaining a satisfactory seal with the flat packing when the fluid has operating pressure. The machining operation involves a risk that the die-cast material obtains pores, thereby causing leakage in the coupling component.

Another arrangement for joining conduits is known from applicant's own Swedish Patent No. 508 279. Yet another arrangement is known from applicant's US Patent No. 6,217,084. Preferred embodiments of the two latter arrangements will be described in detail in the following with reference to the accompanying schematic drawings. One drawback to these otherwise well-functioning arrangements is that they provide a rigid coupling, so that there is little or no possibility of angular adjustment of two joined conduits.

### Summary of the Invention

An object of the invention is to provide an arrangement which permits joining of conduits in an inexpensive and efficient manner and which does not result in a reduction of the inner cross-section of the conduits which are joined together.

A particular object of the invention is to provide an arrangement for joining conduits which allows a slight angular adjustment between two conduits or tubes, or between a conduit and a coupling.

These objects are achived by an arrangement according to the claims.

The invention will be described in more detail with reference to the accompanying drawings in the following.

### Brief Description of the Drawings

Fig. 1 is a longitudinal section of a longitudinal part of a conduit and a longitudinal section of a T-shaped pipe coupling according to prior art,
Fig. 2 is a view illustrating the principle of the prior art technique applied to two conduits, which are shown in longitudinal section, while the joining rider is shown in a perspective view.
Fig. 3 is a longitudinal section of two joined conduits according to prior art,
Fig. 4 shows a first embodiment of an arrangement for joining conduits according to the invention, and
Fig. 5 shows a second embodiment of an arrangement for joining conduits according to the invention.

### Description of Preferred Embodiments

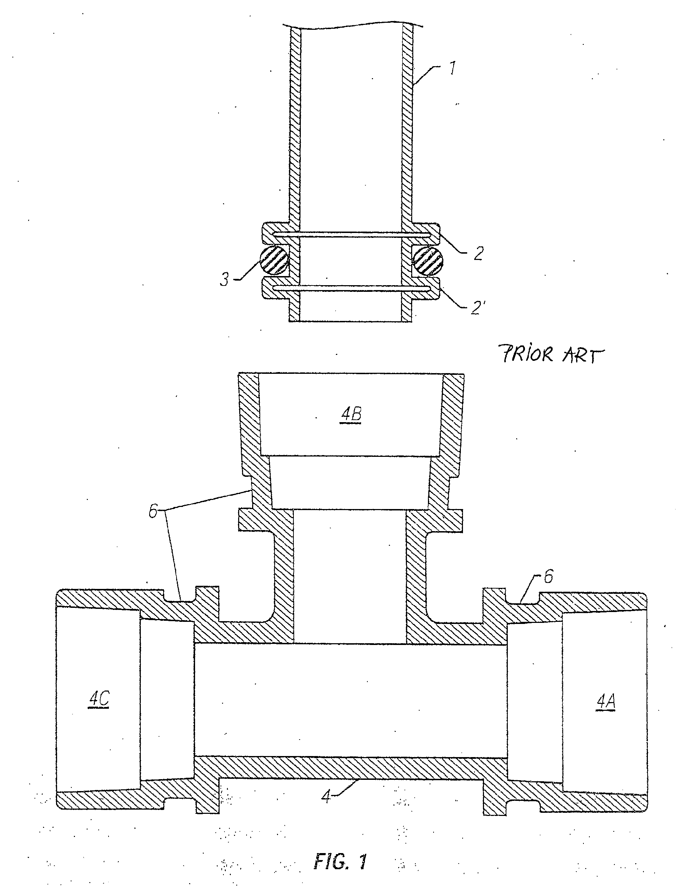

The inventive arrangement for joining conduits comprises a conduit having and end according to prior art shown in Fig. 1, *cf.* SE Patent No. 508 279 and US Patent No. 6,217,084.

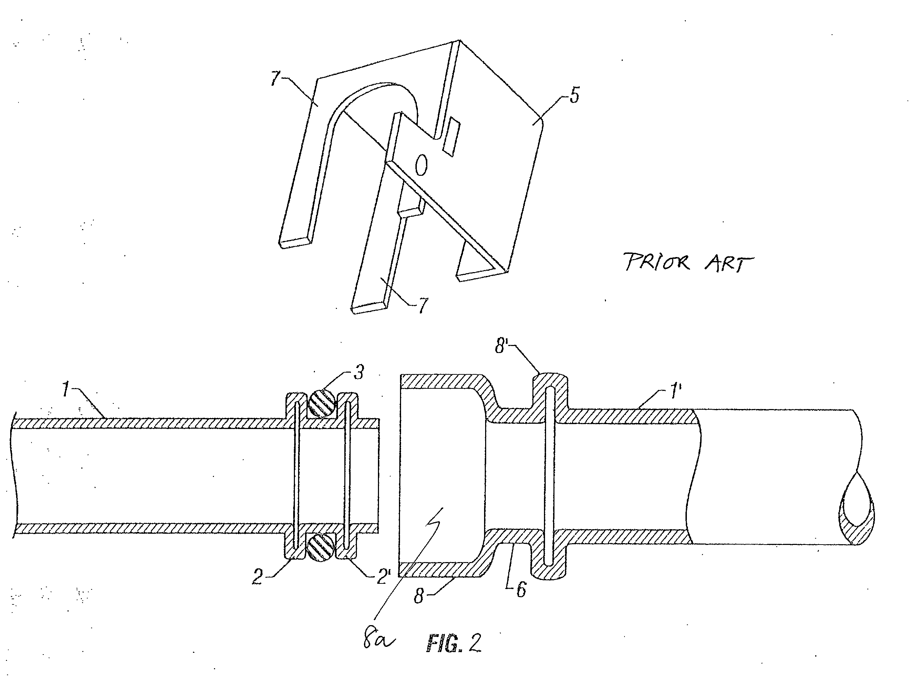

The conduit 1 made of aluminium or an aluminium alloy is provided with two external annular beads 2, 2' at its joining end, said beads being formed of the actual conduit wall in a bulging lathe. The space between the beads is adapted to receive an O ring seal 3, which is pulled over the outer bead 2'. The prior art coupling 4 in Fig. 1 is, for instance, die-cast of aluminium and its inlets/outlets 4A-4C are somewhat conical. Since the O ring is locked by the beads 2, 2', the coupling need not be machined to obtained a close tolerance for receiving the conduit, and radial seal is obtained between the conduit and the coupling without necessitating a great tightening force on the O ring. For easily releasable tightening after joining, use can be made of a rider 5, the legs 7 of which engage behind the inner bead 2 and in a groove 6 formed in the outside of the coupling (see Fig. 2). The front bead 2' may consist of a widened end portion of the conduit 1.

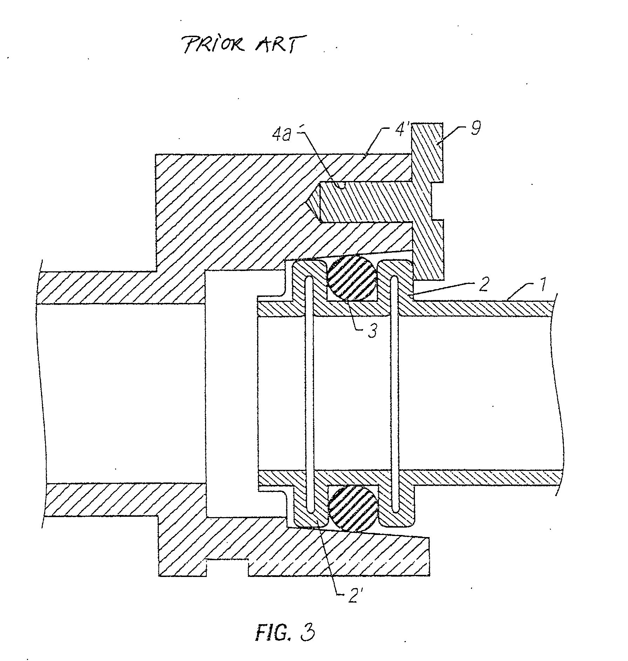

It will be appreciated that no coupling is required for connecting two conduits. According to Fig. 2, the second conduit 1' can, by pressure turning, be provided with a widened end portion 8 for receiving the end of the conduit 1, which is provided with the beads 2, 2' and the O ring 3, and with, for instance, a posteriorly situated bead 8' for forming the groove 6 for a rider leg 7 as described above. Furthermore, any suitable means other than a rider as above can be used for tightening, e.g. a self-threading screw 9, which is screwed into a bore 4'a formed in e.g. the wall of the coupling 4', as shown in Fig. 3, the screw being substantially parallel with the connecting direction, the underside of the screw head or a washer being supported against the rear bead 2.

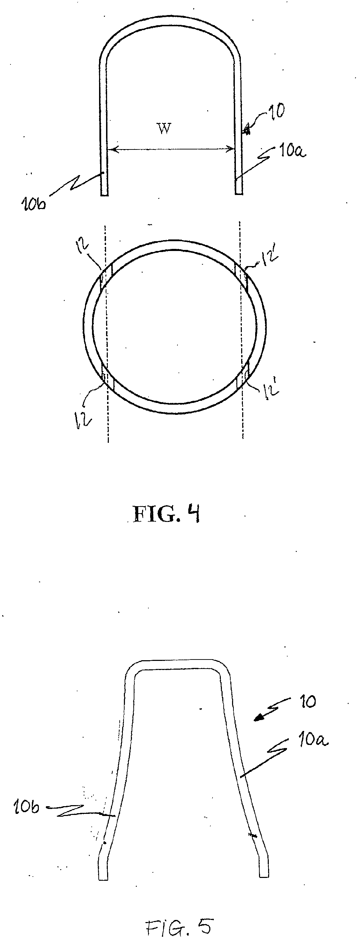

According to a preferred embodiment of the invention (see Fig. 4), the two tubes are kept together by a U-shaped rider 10. The legs of the rider extend through holes 12, 12' in the outer tube (such as the conduit 1', or any of the receivers 4, 4' ). The holes are axially disposed between the open end of the tube and the sealing connection with the sealing member placed between the beads in the inner tube (such as conduit 1), since there is no fluid flowing in this part of the tube.

Furthermore, the holes are arranged in pairs essentially in parallel with each other. The distance W between the legs of the rider is equal to (or slightly larger than) the outside diameter of the inner tube, but smaller than the outside diameter of the beads on the inner tube.

When the rider 10 above is used, firstly the inner tube is inserted into the outer tube and thereafter the rider is inserted into the holes in the outer tube. Thereby, the inner tube is retained in the outer tube, as the beads on the inner tube cannot get past the legs of the rider. In one embodiment, the O ring 3 engages the interior wall of the outer tube, the wall being optionally tapered inward, and once inserted in the holes, the legs of the rider 10 engage the rear bead (such as bead 2 in previous illustrations), to hold the tubes together in an interference fit.

According to the invention a releasable, but still secure tube connection is provided. Furthermore, the connection allows a slight angular adjustment between the two tubes, wherein the connection remains tight and secure.

According to a preferred embodiment the rider 10 comprises a steel wire, having a diameter in the range of 5 mm and being bent to the U-shape. The holes in the outer tube have a diameter slightly larger to provide easy insertion but still retain the rider. The legs of the rider or the holes can be slightly out of parallel, such that when the legs of the rider are inserted in the holes the rider is strained and thus retained on the outer tube.

## Claims

1. A fluid distribution system comprising an annular coupling (4) having an axial bore (4A-C), a conduit (1) having an end for disposing in the bore (4A-C), the end comprising a first annular bead (2) formed on an external surface of the conduit, and a second annular bead (2') formed on an external surface of the conduit in a spaced relation to the first bead (2), a sealing member (3) engaging the coupling bore (4A-C) to form a seal, the member (3) disposed between and engaging the first and second annular beads (2, 2'), and means (10; 12, 12') for detachably retaining the conduit end in the coupling (4), **characterised in that**
said means comprise a U-shaped rider (10) having legs (10a, 10b) and corresponding holes (12, 12') made in the wall of said coupling (4), a portion of said legs being accommodated in said corresponding holes such that they engage the first bead (2) of the conduit and detachably retain the conduit end in the coupling (4).

2. A fluid distribution system according to claim 1, wherein the rider (10) is formed by a steel wire.

3. A fluid distribution system according to claim 1 or 2, wherein there are two pairs of holes (12, 12') in said wall, each pair receiving a respective leg (10a, 10b) of said rider (10).

4. A fluid distribution system comprising an annular receiver (8) having an axial bore (8a), a conduit (1) having an end for disposing in the bore (8a), the end comprising a first annular bead (2) formed on an external surface of the conduit, and a second annular bead (2') formed on an external surface of the conduit in a spaced relation to the first bead (2), a sealing member (3) engaging the receiver bore to form a seal, the member (3) disposed between and engaging the first and second annular beads (2, 2'), and means (10; 12, 12') for detachably retaining the conduit end in the receiver (8), **characterised in that**
said means comprise a U-shaped rider (10) having legs (10a, 10b) and corresponding holes (12, 12') made in the wall of said receiver (8), a portion of said legs being accommodated in said corresponding holes such that they engage the first bead (2) of the conduit and detachably retain the conduit end in the receiver (8).

5. A fluid distribution system according to claim 4, wherein the rider (10) is formed by a steel wire.

6. A fluid distribution system according to claim 4 or 5, wherein there are two pairs of holes (12, 12') in said wall, each pair receiving a respective leg (10a, 10b) of said rider (10).
